# EUROPÄISCHE PATENTSCHRIFT

(11) **EP 3 786 047 B1**
(45) Veröffentlichungstag und Bekanntmachung des Hinweises auf die Patenterteilung: **09.10.2024**
(21) Anmeldenummer: 20192337.2
(22) Anmeldetag: 24.08.2020
(51) Int. Cl.: B62K 21/26

(54) **FAHRRADGRIFF MIT ASYMMETRISCHER INNENHÜLSE**
BICYCLE HANDLEBAR GRIP WITH ASYMMETRICAL INNER SLEEVE
POIGNÉE DE VÉLO AVEC DOUILLE INTERNE ASYMÉTRIQUE

(30) Priorität: 29.08.2019 DE 202019003596 U
(43) Veröffentlichungstag der Anmeldung: 03.03.2021
(73) Patentinhaber: SQlab GmbH, 82024 Taufkirchen (DE)
(72) Erfinder: Hild, Tobias, 82024 Taufkirchen (DE)
(74) Vertreter: Koelle, Alexander

(56) Entgegenhaltungen:
- EP-A1- 2 777 906
- EP-A2- 2 774 834
- DE-U1- 202008 004 422
- US-A1- 2004 036 194

## Beschreibung

### Technisches Gebiet

Die vorliegende Erfindung betrifft einen Fahrradgriff mit einer an einer Innenhülse des Fahrradgriffs angeordneten Abflachung, welche geformt ist, um eine Auflagefläche für eine auf dem Fahrradgriff aufliegende Hand des Fahrradfahrers zu vergrößern.

### Stand der Technik

Es ist bekannt, dass an Lenkstangen von herkömmlichen Fahrrädern Fahrradgriffe befestigt sind, um dem Fahrradfahrer ein wirksames Greifen einer entsprechenden Lenkstange zu ermöglichen.

Ein herkömmlicher Fahrradgriff weist hierbei eine aus einem nicht verformbaren Material gebildete zylinderförmige Innenhülse auf, welche mittels eines Befestigungselements, insbesondere eines Klemmelements, an der zylinderförmigen Lenkstange befestigt wird.

An einer Außenseite der Innenhülse ist ferner ein Außenüberzug aus einem verformbaren Kunststoff angeordnet. Der verformbare Außenüberzug passt sich hierbei der Kontur der Hand des Fahrradfahrers an, so dass ein wirksames Greifen des Fahrradgriffs sichergestellt wird. Durch die verformbaren Eigenschaften kann der Außenüberzug ferner stoßdämpfende Eigenschaften aufweisen, um Fahrbahnunebenheiten auszugleichen.

Hierbei tritt bei herkömmlichen Fahrradgriffen oftmals das Problem auf, dass das verformbare Material des Außenüberzugs die den Fahrradgriff greifende Hand des Fahrradfahrers alleine nicht gleichmäßig stützen kann. Die nicht verformbare zylinderförmige Innenhülse, welche innerhalb des verformbaren Außenüberzugs in dem Fahrradgriff angeordnet ist, drückt während des Gebrauchs des Fahrradgriffs oftmals durch den Außenüberzug hindurch auf die den Fahrradgriff greifende Hand, insbesondere Handballen, des Fahrradfahrers.

Dieses Problem tritt vor allem an dickeren Bereichen des Außenüberzugs auf, so dass gegebenenfalls eine Druckstelle an einer Stelle des Außenüberzugs entstehen kann, an welcher die Innenhülse und eine Außenseite des Außenüberzugs den geringsten Abstand zueinander aufweisen.

Somit drückt die harte zylinderförmige Innenhülse durch den weichen Außenüberzug hindurch, so dass oftmals eine von der Kontur der Hand abweichende Auflagefläche an einer Außenseite, insbesondere Oberseite, des Fahrradgriffs bereitgestellt wird. Aus diesem Grund kann für den Fahrradfahrer der Komfort beim Greifen eines herkömmlichen Fahrradgriffs oftmals reduziert sein.

Die WO 1999/039970 und die EP 1 051 324 B1 offenbaren einen Klemmgriff mit Innenhülse, insbesondere für Lenkstangen von Fahrrädern.

Die DE 20 2008 004 422 U1 offenbart einen Griff, insbesondere Lenkgriff für Zweiräder, entsprechend dem Oberbegriff des Anspruchs 1.

Die EP 2 774 834 A2 offenbart einen Fahrradgriff, der insbesondere für Trekkingräder oder Mountainbikes geeignet ist.

Die EP 2 777 906 A1 offenbart eine Spritzgussform für einen Fahrradgriff, Verfahren zur Herstellung eines Fahrradgriffs sowie Fahrradgriff.

Die US 2004/036194 A offenbart ein Greifelement mit einer weichen, komprimierbaren und verformbaren Außenschicht, welche auf einer darunterliegenden Stützstruktur angeordnet ist.

### Offenlegung der Erfindung

Die vorliegende Erfindung stellt sich zur Aufgabe, einen Fahrradgriff zu schaffen, welcher ein komfortables Aufliegen der Hand eines Fahrradfahrers auf dem Fahrradgriff sicherstellt.

Die Aufgabe der Erfindung wird durch einen Fahrradgriff nach Anspruch 1 gelöst. Die abhängigen Ansprüche beanspruchen bevorzugte Ausführungsformen.

Gemäß einem Aspekt der vorliegenden Erfindung umfasst der erfindungsgemäße Fahrradgriff einen Fahrradgriff, welcher an einer Lenkstange eines Fahrrads befestigt ist, umfassend die Lenkstange des Fahrrads, eine Innenhülse, welche aus einem nicht verformbaren Material gebildet ist, wobei die Innenhülse einen Befestigungsbereich aufweist, welcher an der Lenkstange befestigt ist, wobei es sich bei dem Befestigungsbereich um einen Klemmbereich handelt, und einen Außenüberzug, welcher an einer Außenseite der Innenhülse angeordnet ist, und aus einem verformbaren Kunststoff gebildet ist. Der erfindungsgemäße Fahrradgriff ist dadurch gekennzeichnet, dass an einer Oberseite der Innenhülse eine Abflachung geformt ist, um eine Auflagefläche für eine auf dem Fahrradgriff aufliegende Hand eines Fahrradfahrers zu vergrößern.

Erfindungsgemäß weist die Innenhülse den Klemmbereich auf, durch welchen die Innenhülse an der Lenkstange befestigt ist, wobei der Klemmbereich einen Befestigungsspalt aufweist, welcher eine vorteilhafte Positionierung des Klemmbereichs an der Lenkstange A ermöglicht, wobei zur Montage des Klemmbereichs, durch ein Klemmelement der Durchmesser des Klemmbereichs reduziert wird, um eine wirksame Klemmung der Innenhülse des Fahrradgriffs an der Lenkstange A sicherzustellen, wobei sowohl die Lenkstange A als auch die Innenhülse aus einem nicht verformbaren Material ausgebildet sind.

Der erfindungsgemäße Fahrradgriff hat den Vorteil, dass durch die Abflachung der Komfort für den Fahrradfahrer beim Greifen des Fahrradgriffs erhöht wird. Dies wird dadurch erreicht, dass die Kontaktfläche zwischen der Abflachung und der Grifffläche der Hand, insbesondere Handballen, des Fahrradfahrers vergrößert wird, so dass der auf die Hand des Fahrradfahrers wirkende durch die Form der Innenhülse bedingte Druck reduziert wird.

Insbesondere umfasst das nicht verformbare Material der Innenhülse ein Metall, wie z.B. eine Titanlegierung, oder ein Leichtmetall, wie z.B. eine Aluminiumlegierung, oder einen Kunststoff, wie z.B. einen faserverstärkten Kunststoff.

Erfindungsgemäß ist der Befestigungsbereich der Innenhülse durch ein Befestigungselement an der Lenkstange befestigt. Hierbei liegt das Befestigungselement insbesondere zumindest abschnittsweise an dem Befestigungsbereich an, um die Innenhülse zu befestigen. Das Befestigungselement ist als ein Klemmelement geformt, welches ausgebildet ist, die Innenhülse auf die Lenkstange zu klemmen, wobei das Klemmelement insbesondere eine Schraubeinrichtung und/oder eine Spanneinrichtung umfasst.

Insbesondere umfasst das verformbare Material des Außenüberzugs ein elastisches Material, insbesondere Gummi und/oder einen Elastomer-Kunststoff.

Insbesondere ist der Außenüberzug drehfest mit der Innenhülse verbunden, insbesondere auf die Innenhülse aufgegossen, aufgespritzt oder aufgeklebt.

Erfindungsgemäß entspricht die Oberseite der Innenhülse der Seite der Innenhülse, welche in der bestimmungsgemäßen Montageposition des Fahrradgriffs nach oben ausgerichtet ist, so dass in der bestimmungsgemäßen Montageposition des Fahrradgriffs, die Handfläche, des Fahrradfahrers auf der Oberseite der Innenhülse aufliegen kann. In der bestimmungsgemäßen Montageposition des Fahrradgriffs ist die Oberseite der Innenhülse zum Fahrradfahrer hin ausgerichtet.

Insbesondere ist die Innenhülse in dem Bereich der Abflachung als eine nicht zylinderförmige Innenhülse ausgebildet und/oder ist die Innenhülse außerhalb des Bereichs der Abflachung als eine zylinderförmige Innenhülse ausgebildet.

Erfindungsgemäß ist an der Oberseite der Innenhülse, zumindest eine Erhöhung geformt, welche die Abflachung vergrößert und/oder begrenzt. Wenn die Erhöhung die Abflachung vergrößert, erstreckt sich die Abflachung zumindest abschnittsweise, insbesondere kontinuierlich, entlang einer Oberfläche der zumindest einen Erhöhung. Wenn die Erhöhung die Abflachung zusätzlich oder alternativ begrenzt, ist zumindest abschnittsweise zwischen der Abflachung und der zumindest einen Erhöhung eine strukturelle Abgrenzung, z.B. eine Abgrenzungskontur, angeordnet. Insbesondere erstreckt sich die zumindest eine Erhöhung zumindest abschnittsweise entlang einer Längsachse der Innenhülse.

Erfindungsgemäß sind an der der Oberseite der Innenhülse, eine erste Erhöhung und eine zweite Erhöhung geformt, wobei die erste und zweite Erhöhung an einander abgewandten Seiten der Abflachung angeordnet sind und die Abflachung vergrößern und/oder begrenzen, insbesondere seitlich vergrößern und/oder begrenzen.

Erfindungsgemäß schließen die beiden Erhöhungen einen Winkelbereich zwischen 80° und 120°, insbesondere etwa 105°, in Bezug auf eine Längsachse der Innenhülse ein.

Insbesondere wird der Winkelbereich durch eine erste Winkelachse, welche von der Längsachse der Innenhülse durch ein erstes Erhöhungsmaximum der ersten Erhöhung verläuft, und durch eine zweite Winkelachse, welche von der Längsachse der Innenhülse durch ein zweites Erhöhungsmaximum der zweiten Erhöhung verläuft, begrenzt.

In einer Ausführungsform weist die Innenhülse im Bereich der zumindest einen Erhöhung einen ersten Außendurchmesser auf, und weist die Innenhülse im Bereich der Abflachung einen zweiten Außendurchmesser auf, wobei der erste Außendurchmesser größer als der zweite Außendurchmesser ist.

Insbesondere erstreckt sich der erste Außendurchmesser hierbei von einer Längsachse der Innenhülse zu einem Erhöhungsmaximum der zumindest einen Erhöhung. Insbesondere erstreckt sich der zweite Außendurchmesser hierbei von einer Längsachse der Innenhülse zu einer Abflachungsmitte der Abflachung, wobei die Abflachungsmitte insbesondere in der Mitte zwischen einer ersten und einer zweiten Erhöhung, welche die Abflachung vergrößern und/oder begrenzen, angeordnet ist.

In einer Ausführungsform sind die erste und zweite Erhöhung symmetrisch oder nicht symmetrisch in Bezug auf eine vertikale Schnittebene der Innenhülse geformt. Die vertikale Schnittebene schneidet die Innenhülse insbesondere vertikal und mittig in Bezug auf die bestimmungsgemäße Montageposition des Fahrradgriffs.

In einer Ausführungsform bildet der an der Außenseite der Innenhülse angeordnete Außenüberzug eine weitere Abflachung des Außenüberzugs, wobei die weitere Abflachung an der Abflachung der Innenhülse angeordnet ist, um die Auflagefläche für eine auf dem Fahrradgriff aufliegende Hand des Fahrradfahrers zu vergrößern.

In einer Ausführungsform ist die Abflachung an einem ersten Innenhülsenende der Innenhülse geformt, wobei das erste Innenhülsenende insbesondere einem Ende der Lenkstange zugewandt ist, und/oder ist die weitere Abflachung an einem ersten Außenüberzugsende des Außenüberzugs geformt ist, wobei das erste Außenüberzugsende insbesondere einem Ende der Lenkstange zugewandt ist. Insbesondere nimmt eine Breite, die die Abflachung vergrößert und/oder begrenzt, und zumindest eine Erhöhung ausbildet, in Richtung des ersten Innenhülsenendes zu.

In einer Ausführungsform erstreckt sich die Abflachung von dem ersten Innenhülsenende der Innenhülse zu einem Mittenbereich der Innenhülse und/oder erstreckt sich die weitere Abflachung von dem ersten Außenüberzugsende des Außenüberzugs zu einem weiteren Mittenbereich des Außenüberzugs.

Insbesondere ist der Mittenbereich der Innenhülse zwischen dem ersten Innenhülsenende und einem zweiten Innenhülsenende der Innenhülse angeordnet. Insbesondere ist der Mittenbereich zwischen einem ersten Endbereich der Innenhülse und einem zweiten Endbereich der Innenhülse angeordnet, wobei der erste Endbereich dem ersten Innenhülsenende zugewandt ist, und wobei der zweite Endbereich dem zweiten Innenhülsenende zugewandt ist.

Insbesondere ist der Mittenbereich und/oder der zweite Endbereich der Innenhülse zylinderförmig ausgebildet. Insbesondere ist erste Endbereich der Innenhülse nicht zylinderförmig ausgebildet.

Insbesondere ist der weitere Mittenbereich des Außenüberzugs zwischen dem ersten Außenüberzugsende und einem zweiten Außenüberzugsende des Außenüberzugs angeordnet. Insbesondere ist der weitere Mittenbereich zwischen einem ersten Endbereich des Außenüberzugs und einem zweiten Endbereich des Außenüberzugs angeordnet, wobei der erste Endbereich dem ersten Außenüberzugsende zugewandt ist, und wobei der zweite Endbereich dem zweiten Außenüberzugsende zugewandt ist.

### Kurze Beschreibung der Figuren

Die Erfindung wird nun unter Bezugnahme auf die beigefügten Figuren erläutert, die exemplarische und nicht beschränkende Ausführungsformen der Erfindung zeigen, wobei
Figur 1 eine Innenhülse eines Fahrradgriffs gemäß einer Ausführungsform zeigt, und
Figur 2 den in Figur 1 dargestellten Fahrradgriff mit einem Außenüberzug zeigt, und
Figur 3 die in Figur 1 dargestellte Innenhülse des Fahrradgriffs in einer Seitenansicht zeigt, und
Figur 4 die in Figur 1 dargestellte Innenhülse des Fahrradgriffs in einer weiteren Ansicht zeigt, und
Figur 5 den in Figur 2 dargestellten Fahrradgriff in einer weiteren Ansicht zeigt, und
Figur 6 zwei der in Figur 1 dargestellten Innenhülsen des Fahrradgriffs an gegenüberliegenden Enden einer Lenkstange zeigt, und
Figur 7 zwei der in Figur 2 dargestellten Fahrradgriffe an gegenüberliegenden Enden einer Lenkstange zeigt.

### Detaillierte Beschreibung der Figuren

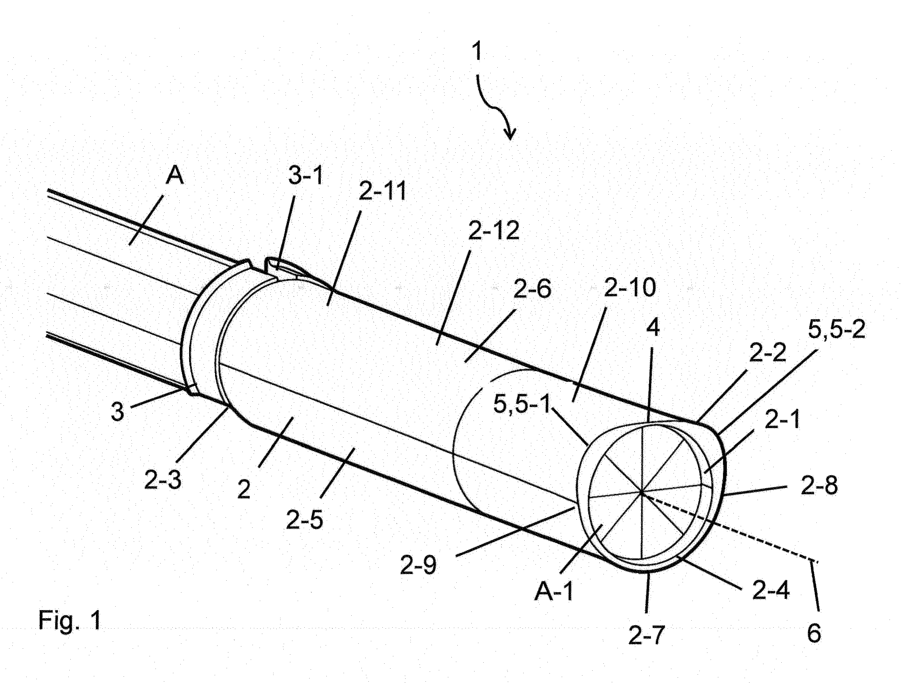

Figur 1 zeigt eine Innenhülse eines Fahrradgriffs gemäß einer Ausführungsform.

Herkömmliche Fahrräder weisen Lenkstangen auf, welche üblicherweise am Vorbau des jeweiligen Fahrrads befestigt sind. Herkömmliche Lenkstangen können gerade ausgebildet sein oder gebogene oder geschwungene Formen aufweisen. Herkömmliche Lenkstangen sind meist aus Metall, Leichtmetall oder faserverstärktem Kunststoff geformt. Herkömmliche Lenkstangen sind meist zylinderförmig mit einem runden Querschnitt geformt.

Da das Material herkömmlicher Lenkstangen meist eine hohe Härte aufweist, werden in herkömmlichen Fahrrädern üblicherweise Fahrradgriffe verwendet, welche an der jeweiligen Lenkstange befestigt werden. Entsprechende Fahrradgriffe ermöglichen dem Fahrradfahrer ein vorteilhaftes Greifen der Lenkstange.

Herkömmliche Fahrradgriffe weisen üblicherweise eine Innenhülse auf, welche mittels Klemmung an der Lenkstange befestigt sind, um eine stabile Verbindung zwischen der Lenkstange und dem Fahrradgriff zu gewährleisten sowie ein Verdrehen oder Verrutschen des Fahrradgriffs vermeiden.

Auf der Innenhülse eines herkömmlichen Fahrradgriffs wird üblicherweise ein Außenüberzug aus einem verformbaren Material angeordnet, so dass für den Fahrradfahrer ein angenehmes Greifen des Fahrradgriffs ermöglicht wird. Zudem stellt das verformbare Material des herkömmlichen Fahrradgriffs eine stoßdämpfende Funktion bereit.

In Figur 1 ist eine Innenhülse 2 eines Fahrradgriffs 1 gemäß einer Ausführungsform der vorliegenden Erfindung gezeigt, wobei ein an der Innenhülse 2 angeordneter Außenüberzug des Fahrradgriffs 1 nicht dargestellt ist.

Die Innenhülse 2 ist hierbei an einer Lenkstange A eines Fahrrads befestigt, wobei die Innenhülse 2 auf die Lenkstange A geschoben ist und umlaufend, insbesondere vollständig umlaufend, an der Lenkstange A anliegt. Hierbei liegt eine Innenseite 2-1 der Innenhülse 2 an der Lenkstange A an. Die Lenkstange A ist als eine zylinderförmige Lenkstange A ausgebildet.

Hierbei weist die Innenhülse 2 ein erstes Innenhülsenende 2-2 auf, welches einem Ende A-1 der Lenkstange A zugewandt ist und weist die Innenhülse 2 ein zweites Innenhülsenende 2-3 auf, welches dem Ende A-1 der Lenkstange A abgewandt ist. Aus der Figur 1 ist ersichtlich, dass in dem ersten Innenhülsenende 2-2 eine Innenhülsenöffnung 2-4 gebildet ist.

Die Innenhülse 2 weist ferner einen Befestigungsbereich 3, bei dem es sich erfindungsgemäß um einen Klemmbereich handelt, auf, durch welchen die Innenhülse 2 an der Lenkstange A befestigt werden kann. Der Befestigungsbereich 3 weist hier einen Befestigungsspalt 3-1 auf, welcher eine vorteilhafte Positionierung des Befestigungsbereichs 3 an der Lenkstange A ermöglicht. Zur Montage des Befestigungsbereichs 3, insbesondere des Klemmbereichs, kann beispielweise durch ein in Figur 1 nicht dargestelltes Befestigungselement, insbesondere Klemmelement, insbesondere eine Schraubvorrichtung oder eine Spannvorrichtung, der Durchmesser des Befestigungsbereichs 3 reduziert werden, um die Innenhülse 2 wirksam an der Lenkstange A zu befestigen, insbesondere an die Lenkstange A zu klemmen.

Um eine wirksame Befestigung, insbesondere Klemmung, der Innenhülse 2 des Fahrradgriffs 1 an der Lenkstange A sicherzustellen, ist sowohl die Lenkstange A als auch die Innenhülse 2 aus einem nicht verformbaren Material ausgebildet. Das nicht verformbare Material der Innenhülse 2 umfasst hierbei insbesondere ein Metall, wie z.B. eine Titanlegierung, oder ein Leichtmetall, wie eine Aluminiumlegierung oder Kunststoff, insbesondere einen faserverstärkten Kunststoff.

Die Innenhülse 2 weist ferner eine Außenseite 2-5 auf, wobei die Außenseite 2-5 der an der Lenkstange A anliegenden Innenseite 2-1 der Innenhülse 2 abgewandt ist. Bezogen auf die in Figur 1 nur schematisch dargestellte bestimmungsgemäße Montageposition des Fahrradgriffs 1 weist die Außenseite 2-5 der Innenhülse 2 eine Oberseite 2-6, eine Unterseite 2-7, eine Vorderseite 2-8 und eine Rückseite 2-9 auf.

Auch wenn in der Figur 1 ein an der Außenseite 2-5 der Innenhülse 2 angeordneter Außenüberzugs des Fahrradgriffs 1 nicht dargestellt ist, liegt in der in Figur 1 dargestellten bestimmungsgemäßen Montageposition des Fahrradgriffs 1 die Hand, insbesondere die Handfläche, des Fahrradfahrers insbesondere in einem Bereich des Außenüberzugs auf, welcher der Oberseite 2-6 der Innenhülse 2 zugewandt ist.

Die Innenhülse 2 des in der Figur 1 dargestellten erfindungsgemäßen Fahrradgriffs 1 weist eine Abflachung 4 auf, welche an der Außenseite 2-5, insbesondere an der Oberseite 2-6, der Innenhülse 2 geformt ist. Die Abflachung 4 vergrößert eine Auflagefläche für eine auf dem Fahrradgriff 1 aufliegende Hand des Fahrradfahrers.

Der in Figur 1 nicht dargestellte Außenüberzug des Fahrradgriffs 1 bildet hierbei insbesondere eine in Figur 1 nicht dargestellte weitere Abflachung des Außenüberzugs, welche an der Abflachung 4 der Innenhülse 2 angeordnet ist. Somit resultiert die Abflachung 4 der Innenhülse 2 in einer entsprechenden weiteren Abflachung des Außenüberzugs, welche die Auflagefläche für eine auf dem Fahrradgriff 1 aufliegende Hand des Fahrradfahrers vergrößert.

Insbesondere ist die Abflachung 4 in einem ersten Endbereich 2-10 der Innenhülse 2 geformt, wobei der erste Endbereich 2-10 dem ersten Innenhülsenende 2-2 zugewandt ist. Somit ist der Querschnitt der Innenhülse 2 in dem ersten Endbereich 2-10 nicht rund, wie in herkömmlichen Innenhülsen 2.

Insbesondere weist die Innenhülse 2 einen zweiten Endbereich 2-11 auf, welcher dem zweiten Innenhülsenende 2-3 zugewandt ist. Insbesondere sind der erste Endbereich 2-10 und der zweite Endbereich 2-11 durch einen Mittenbereich 2-12 der Innenhülse 2 miteinander verbunden. Insbesondere sind der zweite Endbereich 2-11 und/oder der Mittenbereich 2-12 der Innenhülse 2 zylinderförmig mit einem runden Querschnitt ausgebildet.

An der auf dem Fahrradgriff 1 aufliegenden Grifffläche der Hand des Fahrradfahrers, insbesondere Handballen, ist der durch den Fahrradfahrer auf den Fahrradgriff 1 ausgeübte Druck am größten. Durch die Abflachung 4 wird die Kontaktfläche zwischen dem Fahrradgriff 1 und der Grifffläche der Hand vergrößert, so dass der auf die Hand wirkende Druck reduziert wird. Dadurch kann der Komfort für den Fahrradfahrer beim Greifen des Fahrradgriffs 1 verbessert werden.

Hierbei ist an der Außenseite 2-5 der Innenhülse 2, insbesondere an der Oberseite 2-6 der Innenhülse 2, zumindest eine Erhöhung 5 geformt, welche die Abflachung 4 insbesondere vergrößert. Somit erstreckt sich die Abflachung insbesondere zumindest abschnittsweise, insbesondere kontinuierlich an der Oberfläche der zumindest einen Erhöhung 5. Die zumindest eine Erhöhung 5 erstreckt sich insbesondere zumindest abschnittsweise entlang einer Längsachse 6 der Innenhülse 2.

Insbesondere umfasst die zumindest eine Erhöhung 5 eine erste Erhöhung 5-1 und eine zweite Erhöhung 5-2, wobei die erste und zweite Erhöhung 5-1, 5-2 an einander abgewandten Seiten der Abflachung 4 angeordnet sind und die Abflachung 4 insbesondere vergrößern und/oder begrenzen, insbesondere seitlich vergrößern und/oder begrenzen.

Insbesondere ist die zumindest eine Erhöhung 5, 5-1, 5-2 zumindest abschnittsweise an dem ersten Innenhülsenende 2-2 der Innenhülse 2 angeordnet. Insbesondere ist die zumindest eine Erhöhung 5, 5-1, 5-2 in dem ersten Endbereich 2-10 der Innenhülse 2 angeordnet. Insbesondere nimmt eine Breite der zumindest einen Erhöhung 5, 5-1, 5-2 in Richtung des ersten Innenhülsenendes 2-2 zu.

Wie aus der Figur 1 hervorgeht, weicht aufgrund der Abflachung 4 die Form der Innenhülse 2 zumindest abschnittsweise von der herkömmlich verwendeten Zylinderform entsprechender herkömmlicher Innenhülsen 2 ab.

Zusammenfassend kann festgehalten werden, dass die Abflachung 4 an der Innenhülse 2 die Auflagefläche für eine auf dem Fahrradgriff 1 aufliegende Hand des Fahrradfahrers vergrößert, wodurch sich der Komfort für den Fahrradfahrer beim Greifen des Fahrradgriffs 1 verbessert.

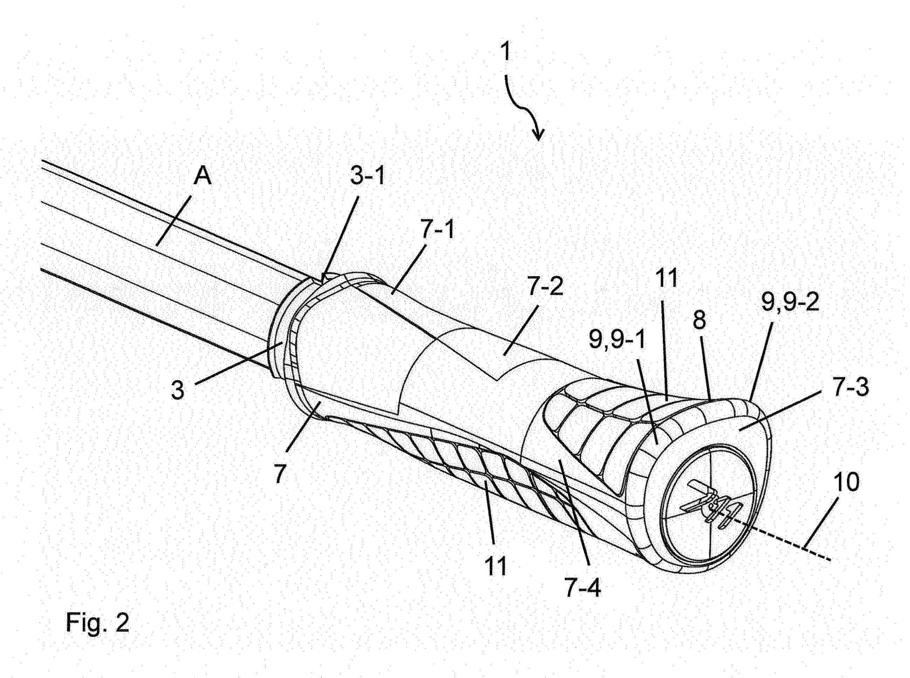

Figur 2 zeigt den in Figur 1 dargestellten Fahrradgriff mit einem Außenüberzug.

Hierbei entspricht der in Figur 2 dargestellte Fahrradgriff 1 dem in Figur 1 dargestellten Fahrradgriff 1, bis darauf, dass ein Außenüberzug 7 des Fahrradgriffs 1 dargestellt ist, welcher an einer Außenseite 2-5 der Innenhülse 2 des Fahrradgriffs 1 angeordnet ist. Die Innenhülse 2 des Fahrradgriffs 1 ist in der Figur 2 durch den Außenüberzug 7 verdeckt und entsprechend in der Figur 2 nicht dargestellt.

Insbesondere ist der Außenüberzug 7 drehfest mit der Innenhülse 2 verbunden, insbesondere auf die Innenhülse 2 aufgegossen, aufgespritzt oder aufgeklebt.

Der Außenüberzug 7 ist aus einem verformbaren Kunststoff gebildet, insbesondere Gummi und/oder einem Elastomer-Kunststoff, so dass der Außenüberzug 7, wenn dieser durch die Hand des Fahrradfahrers gegriffen wird, verformt wird.

Die Innenhülse 2 weist eine in Figur 2 nicht dargestellte Abflachung 4 an der Außenseite 2-5 insbesondere an der Oberseite 2-6 auf. Der Außenüberzug 7 bildet eine weitere Abflachung 8, wobei die weitere Abflachung 8 des Außenüberzugs 7 an der Abflachung 4 der Innenhülse 2 angeordnet ist, um die Auflagefläche für eine auf dem Fahrradgriff 1 aufliegende Hand des Fahrradfahrers zu vergrößern.

Da die in dem Außenüberzug 7 aufgenommene Innenhülse 2 aus einem nicht verformbaren Material gebildet ist, passt sich die Kontur des Außenüberzugs 7 beim Greifen durch den Fahrradfahrer an die Kontur der Innenhülse 2 an.

Insbesondere ist die weitere Abflachung 8 an einer Außenseite 7-1, insbesondere Oberseite 7-2, des Außenüberzugs 7 gebildet.

Zudem ist an der Außenseite 7-1 des Außenüberzugs 7, insbesondere an der Oberseite 7-2 des Außenüberzugs 7, zumindest eine weitere Erhöhung 9 geformt, welche die weitere Abflachung 8 vergrößert und/oder begrenzt. Die zumindest eine weitere Erhöhung 9 erstreckt sich insbesondere zumindest abschnittsweise entlang einer Längsachse 10 des Außenüberzugs 7.

Insbesondere umfasst die zumindest eine weitere Erhöhung 9 eine erste weitere Erhöhung 9-1 und eine zweite weitere Erhöhung 9-2, wobei die erste und zweite weitere Erhöhung 9-1, 9-2 an einander abgewandten Seiten der weiteren Abflachung 8 angeordnet sind und die weitere Abflachung 8 vergrößern und/oder begrenzen, insbesondere seitlich vergrößern und/oder begrenzen.

Insbesondere ist die zumindest eine weitere Erhöhung 9, 9-1, 9-2 zumindest abschnittsweise an einem ersten Außenüberzugsende 7-3 des Außenüberzugs 7 angeordnet, welches einem Ende A-1 der Lenkstange A zugewandt ist. Insbesondere ist die zumindest eine weitere Erhöhung 9, 9-1, 9-2 in einem ersten Endbereich 7-4 des Außenüberzugs 7 angeordnet, wobei der erste Endbereich 7-4 des Außenüberzugs 7 dem ersten Außenüberzugsende 7-3 zugewandt ist. Insbesondere nimmt eine Breite der zumindest einen weiteren Erhöhung 9, 9-1, 9-2 in Richtung des ersten Außenüberzugsendes 7-3 zu.

Wie aus der Figur 2 ferner ersichtlich ist, weist der Außenüberzug 7 eine Vielzahl von Griffkonturen 11 auf, welche geformt sind, um ein Abrutschen der Hand des Fahrradfahrers von dem Fahrradgriff 1 zu erschweren.

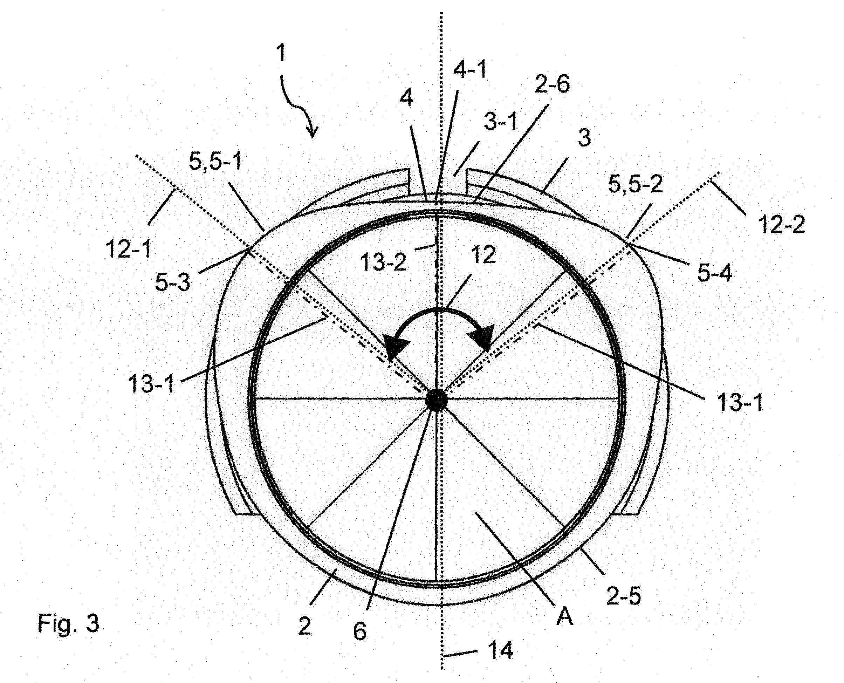

Figur 3 zeigt die in Figur 1 dargestellte Innenhülse des Fahrradgriffs in einer Seitenansicht. Die Innenhülse 2 ist hierbei an der Lenkstange A des Fahrrads durch einen Befestigungsbereich 3 befestigt.

Wie bereits ausgeführt wurde, ist an einer Außenseite 2-5, insbesondere Oberseite 2-6, der Innenhülse 2 eine Abflachung 4 geformt, welche insbesondere durch zumindest eine Erhöhung 5, 5-1, 5-2 seitlich vergrößert und/oder begrenzt ist.

Figur 3 zeigt einen Winkelbereich 12, welcher durch die Erhöhungen 5, 5-1, 5-2 in Bezug auf die Längsachse 6 der Innenhülse 2 eingeschlossen wird. Insbesondere wird der Winkelbereich 12 durch eine erste Winkelachse 12-1, welche von der Längsachse 6 durch ein erstes Erhöhungsmaximum 5-3 der ersten Erhöhung 5-1 verläuft, und durch eine zweite Winkelachse 12-2, welche von der Längsachse 6 durch ein zweites Erhöhungsmaximum 5-4 der zweiten Erhöhung 5-2 verläuft, begrenzt.

Insbesondere beträgt der Winkelbereich 12 zwischen 80° und 120°, insbesondere 105°.

Wie aus der Figur 3 hervorgeht, weist die Innenhülse 2 im Bereich der zumindest einen Erhöhung 5, 5-1, 5-2 einen ersten Außendurchmesser 13-1 auf, und weist die Innenhülse 2 im Bereich der Abflachung 4 einen zweiten Außendurchmesser 13-2 auf, wobei der erste Außendurchmesser 13-1 größer als der zweite Außendurchmesser 13-2 ist.

Der erste Außendurchmesser 13-1 erstreckt sich hierbei insbesondere von einer Längsachse 6 der Innenhülse 2 zu dem jeweiligen Erhöhungsmaximum 5-3, 5-4 der jeweiligen Erhöhung 5, 5-1, 5-2.

Der zweite Außendurchmesser 13-2 erstreckt sich hierbei insbesondere von einer Längsachse 6 der Innenhülse 2 zu der Abflachung 4, insbesondere zu der Abflachungsmitte 4-1 der Abflachung 4, welche in der Mitte zwischen der ersten und zweiten Erhöhung 5-1, 5-2 angeordnet ist.

Somit sind die in Fig. 3 dargestellte erste Erhöhung 5-1 und zweite Erhöhung 5-2 symmetrisch in Bezug auf eine vertikale Schnittebene 14 der Innenhülse 2 geformt.

Gemäß einer in Fig. 3 nicht dargestellten Alternative ist es möglich, dass die erste Erhöhung 5-1 und die zweite Erhöhung 5-2 in Bezug auf die vertikale Schnittebene 14 der Innenhülse 2 nicht symmetrisch zueinander angeordnet sind.

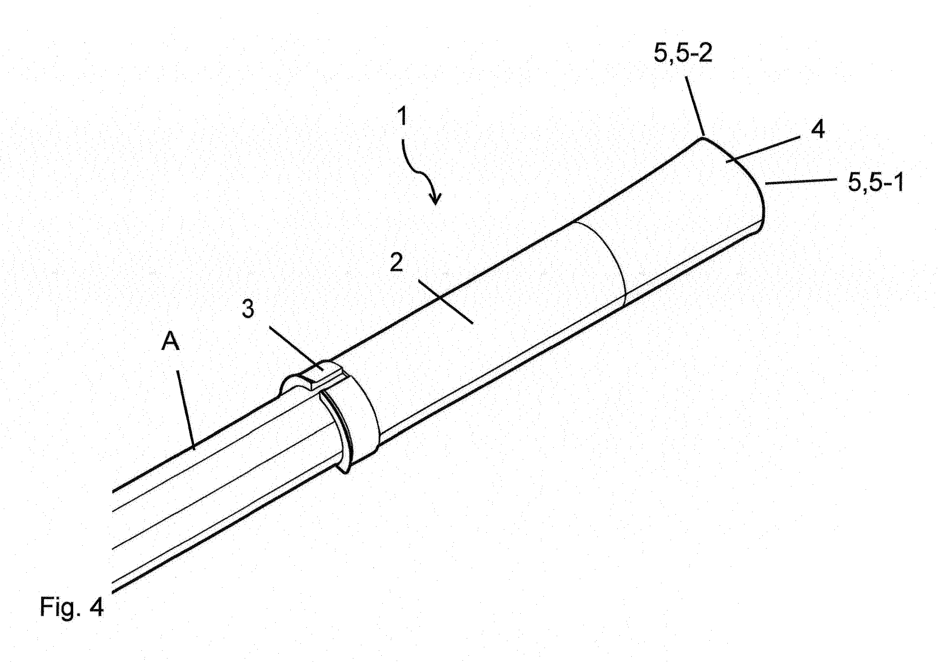

Figur 4 zeigt die in Figur 1 dargestellte Innenhülse des Fahrradgriffs in einer weiteren Ansicht. Für weitere Details hierzu wird auf die Ausführungen in Bezug auf die Figur 1 verwiesen.

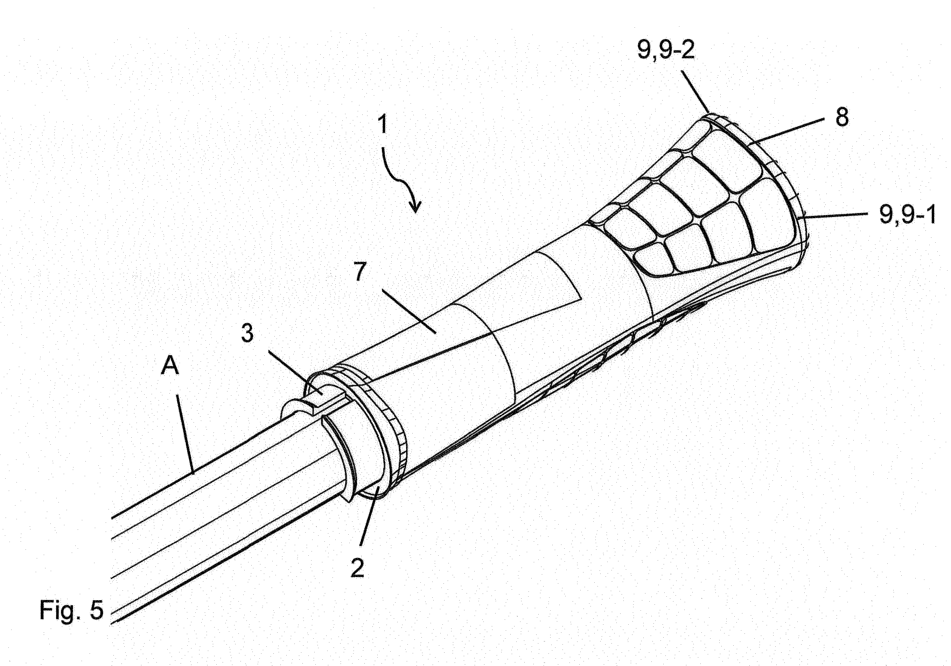

Figur 5 zeigt den in Figur 2 dargestellten Fahrradgriff in einer weiteren Ansicht. Für weitere Details hierzu wird auf die Ausführungen in Bezug auf die Figur 2 verwiesen.

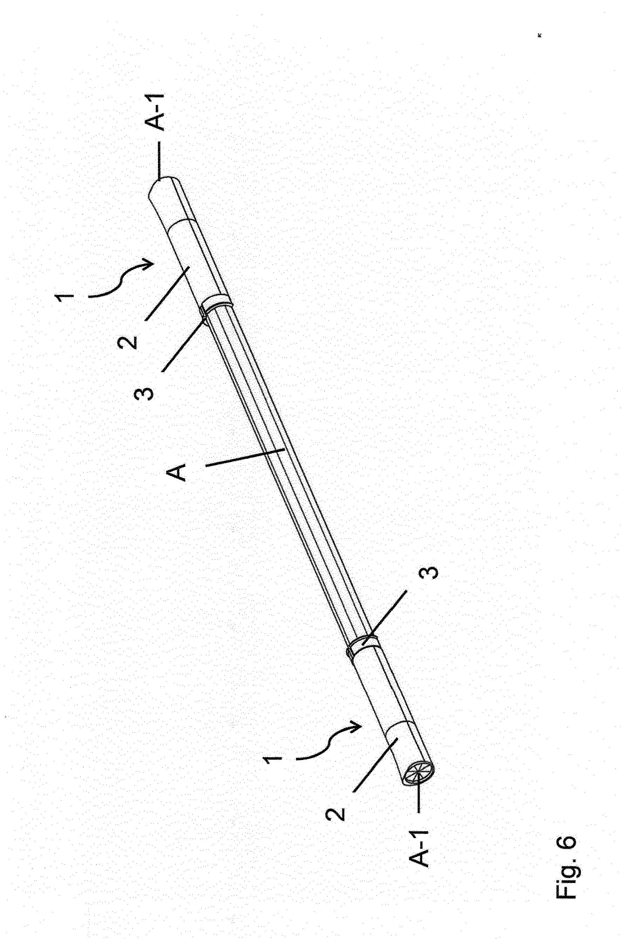

Figur 6 zeigt zwei der in Figur 1 dargestellten Innenhülsen des Fahrradgriffs an gegenüberliegenden Enden einer Lenkstange. Hierbei sind die beiden Innenhülse 2 jeweils an unterschiedlichen Enden A-1 der Lenkstange A angeordnet. Für weitere Details hierzu wird auf die Ausführungen in Bezug auf die Figur 1 verwiesen.

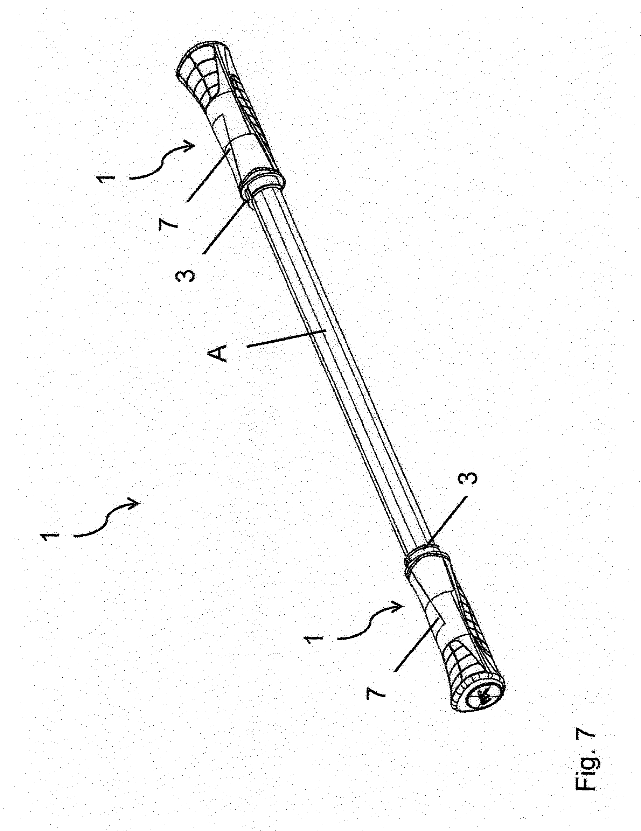

Figur 7 zeigt zwei der in Figur 2 dargestellten Fahrradgriffe an gegenüberliegenden Enden einer Lenkstange. Hierbei sind die beiden Fahrradgriffe 1 jeweils an unterschiedlichen Enden A-1 der Lenkstange A angeordnet. Für weitere Details hierzu wird auf die Ausführungen in Bezug auf die Figur 2 verwiesen.

### Bezugszeichen

- A: Lenkstange
- A-1: Ende der Lenkstange
- 1: Fahrradgriff
- 2: Innenhülse
- 2-1: Innenseite der Innenhülse
- 2-2: Erstes Innenhülsenende
- 2-3: Zweites Innenhülsenende
- 2-4: Innenhülsenöffnung
- 2-5: Außenseite der Innenhülse
- 2-6: Oberseite der Innenhülse
- 2-7: Unterseite der Innenhülse
- 2-8: Vorderseite der Innenhülse
- 2-9: Rückseite der Innenhülse
- 2-10: Erster Endbereich der Innenhülse
- 2-11: Zweiter Endbereich der Innenhülse
- 2-12: Mittenbereich der Innenhülse
- 3: Befestigungsbereich
- 3-1: Befestigungsspalt
- 4: Abflachung
- 4-1: Abflachungsmitte
- 5: Erhöhung
- 5-1: Erste Erhöhung
- 5-2: Zweite Erhöhung
- 5-3: Erstes Erhöhungsmaximum
- 5-4: Zweites Erhöhungsmaximum
- 6: Längsachse der Innenhülse
- 7: Außenüberzug
- 7-1: Außenseite des Außenüberzugs
- 7-2: Oberseite des Außenüberzugs
- 7-3: Erstes Außenüberzugsende
- 7-4: Erster Endbereich des Außenüberzugs
- 8: Weitere Abflachung
- 9: Weitere Erhöhung
- 9-1: Weitere erste Erhöhung
- 9-2: Weitere zweite Erhöhung
- 10: Längsachse des Außenüberzugs
- 11: Griffkonturen
- 12: Winkelbereich
- 12-1: Erste Winkelachse
- 12-2: Zweite Winkelachse
- 13-1: Erster Außendurchmesser der Innenhülse
- 13-2: Zweiter Außendurchmesser der Innenhülse
- 14: Vertikale Schnittebene der Innenhülse

## Patentansprüche

1. Anordnung eines Fahrradgriffs (1) und einer Lenkstange (A), wobei der Fahrradgriff (1) an der Lenkstange (A) befestigt ist, wobei der Fahrradgriff (1) umfasst:
eine Innenhülse (2), welche aus einem nicht verformbaren Material gebildet ist,
wobei die Innenhülse einen Befestigungsbereich (3) aufweist, welcher an der Lenkstange (A) befestigt ist, wobei es sich bei dem Befestigungsbereich (3) um einen Klemmbereich (3) handelt; und
einen Außenüberzug (7), welcher an einer Außenseite (2-5) der Innenhülse (2) angeordnet ist, und aus einem verformbaren Kunststoff gebildet ist,
**dadurch gekennzeichnet, dass**
an einer Oberseite (2-6) der Innenhülse (2) eine Abflachung (4) geformt ist, um eine Auflagefläche für eine auf dem Fahrradgriff (1) aufliegende Hand eines Fahrradfahrers zu vergrößern,
wobei an der Oberseite (2-6) der Innenhülse (2) eine erste Erhöhung (5, 5-1) und eine zweite Erhöhung (5, 5-2) geformt sind, wobei die erste und zweite Erhöhung (5, 5-1, 5-2) an einander abgewandten Seiten der Abflachung (4) angeordnet sind und die Abflachung (4) vergrößern und/oder begrenzen, und
wobei die beiden Erhöhungen (5, 5-1, 5-2) einen Winkelbereich (12) zwischen 80° und 120° in Bezug auf eine Längsachse (6) der Innenhülse (2) einschließen,
wobei die Innenhülse (2) den Klemmbereich (3) aufweist, durch welchen die Innenhülse (2) an der Lenkstange (A) befestigt ist, wobei der Klemmbereich (3) einen Befestigungsspalt (3-1) aufweist, welcher eine vorteilhafte Positionierung des Klemmbereichs (3) an der Lenkstange (A) ermöglicht, wobei zur Montage des Klemmbereichs (3) durch ein Klemmelement der Durchmesser des Klemmbereichs (3) reduziert wird, um die Innenhülse (2) wirksam an die Lenkstange (A) zu klemmen, wobei, um eine wirksame Klemmung der Innenhülse (2) des Fahrradgriffs (1) an der Lenkstange (A) sicherzustellen, sowohl die Lenkstange (A) als auch die Innenhülse (2) aus einem nicht verformbaren Material ausgebildet ist,
wobei die Oberseite (2-6) der Innenhülse (2) der Seite der Innenhülse (2) entspricht, welche in der bestimmungsgemäßen Montageposition des Fahrradgriffs (1) nach oben ausgerichtet ist, so dass in der bestimmungsgemäßen Montageposition des Fahrradgriffs (1) die Handfläche des Fahrradfahrers auf der Oberseite (2-6) der Innenhülse (2) aufliegen kann, und wobei in der bestimmungsgemäßen Montageposition des Fahrradgriffs (1) die Oberseite (2-6) der Innenhülse (2) zum Fahrradfahrer hin ausgerichtet ist.

2. Anordnung nach Anspruch 1, **dadurch gekennzeichnet, dass** die beiden Erhöhungen (5, 5-1, 5-2) einen Winkelbereich (12) von etwa 105° in Bezug auf die Längsachse (6) der Innenhülse (2) einschließen.

3. Anordnung nach einem der vorangehenden Ansprüche 1 bis 2, **dadurch gekennzeichnet, dass** die Innenhülse (2) im Bereich der zumindest einen Erhöhung (5, 5-1, 5-2) einen ersten Außendurchmesser (13-1) aufweist, wobei die Innenhülse (2) im Bereich der Abflachung (4) einen zweiten Außendurchmesser (13-2) aufweist, wobei der erste Außendurchmesser (13-1) größer als der zweite Außendurchmesser (13-2) ist.

4. Anordnung nach einem der vorangehenden Ansprüche 1 bis 3, **dadurch gekennzeichnet, dass** die erste und zweite Erhöhung (5, 5-1, 5-2) symmetrisch oder nicht symmetrisch in Bezug auf eine vertikale Schnittebene (14) der Innenhülse (2) geformt sind.

5. Anordnung nach einem der vorangehenden Ansprüche, **dadurch gekennzeichnet, dass** der an der Außenseite (2-5) der Innenhülse (2) angeordnete Außenüberzug (7) eine weitere Abflachung (8) des Außenüberzugs (7) bildet, wobei die weitere Abflachung (8) an der Abflachung (4) der Innenhülse (2) angeordnet ist, um die Auflagefläche für eine auf dem Fahrradgriff (1) aufliegende Hand des Fahrradfahrers zu vergrößern.

6. Anordnung nach einem der vorangehenden Ansprüche, **dadurch gekennzeichnet, dass** die Abflachung (4) an einem ersten Innenhülsenende (2-2) der Innenhülse (2) geformt ist, wobei das erste Innenhülsenende (2-2) insbesondere einem Ende (A-1) der Lenkstange (A) zugewandt ist, und/oder wobei die weitere Abflachung (8) an einem ersten Außenüberzugsende (7-3) des Außenüberzugs (7) geformt ist, wobei das erste Außenüberzugsende (7-3) insbesondere einem Ende (A-1) der Lenkstange (A) zugewandt ist.

7. Anordnung nach Anspruch 6, **dadurch gekennzeichnet, dass** sich die Abflachung (4) von dem ersten Innenhülsenende (2-2) der Innenhülse (2) zu einem Mittenbereich (2-12) der Innenhülse (2) erstreckt, und/oder wobei sich die weitere Abflachung (8) von dem ersten Außenüberzugsende (7-3) des Außenüberzugs (7) zu einem weiteren Mittenbereich des Außenüberzugs (7) erstreckt.

## Claims

1. An arrangement of a bicycle handlebar grip (1) and a handlebar (A), wherein the bicycle handlebar grip (1) is fastened on the handlebar (A), and wherein the bicycle handlebar grip (1) comprises:
an inner sleeve (2) that is made of a non-deformable material,
wherein the inner sleeve has a fastening region (3) that is fastened on the handlebar (A), and wherein the fastening region (3) is a clamping region (3), and
an outer cover (7) that is arranged on an outer side (2-5) of the inner sleeve (2) and made of a deformable plastic,
**characterized in that**
a flattening (4) is formed on an upper side (2-6) of the inner sleeve (2) in order to enlarge a contact surface for a hand of a bicyclist resting on the bicycle handlebar grip (1),
wherein a first elevation (5, 5-1) and a second elevation (5, 5-2) are formed on the upper side (2-6) of the inner sleeve (2), wherein the first and the second elevation (5, 5-1, 5-2) are arranged on opposite sides of the flattening (4) and enlarge and/or delimit the flattening (4), and wherein the two elevations (5, 5-1, 5-2) include an angular range (12) between 80° and 120° referred to a longitudinal axis (6) of the inner sleeve (2),
wherein the inner sleeve (2) has the clamping region (3), by means of which the inner sleeve (2) is fastened on the handlebar (A), wherein the clamping region (3) has a fastening gap (3-1) that allows advantageous positioning of the clamping region (3) on the handlebar (A), wherein the diameter of the clamping region (3) is reduced in order to effectively clamp the inner sleeve (2) on the handlebar (A) for the installation of the clamping region (3) by means of a clamping element, wherein the handlebar (A), as well as the inner sleeve (2), is made of a non-deformable material in order to ensure effective clamping of the inner sleeve (2) of the bicycle handlebar grip (1) on the handlebar (A),
wherein the upper side (2-6) of the inner sleeve (2) corresponds to the side of the inner sleeve (2), which is oriented upward in the intended installation position of the bicycle handlebar grip (1), such that the hand surface of the bicyclist can rest on the upper side (2-6) of the inner sleeve (2) in the intended installation position of the bicycle handlebar grip (1), and wherein the upper side (2-6) of the inner sleeve (2) is oriented toward the bicyclist in the intended installation position of the bicycle handlebar grip (1).

2. The arrangement according to claim 1, **characterized in that** the two elevations (5, 5-1, 5-2) include an angular range (12) of approximately 105° referred to the longitudinal axis (6) of the inner sleeve (2).

3. The arrangement according to one of preceding claims 1 to 2, **characterized in that** the inner sleeve (2) has a first outside diameter (13-1) in the region of the at least one elevation (5, 5-1, 5-2), wherein the inner sleeve (2) has a second outside diameter (13-2) in the region of the flattening (4), and wherein the first outside diameter (13-1) is greater than the second outside diameter (13-2).

4. The arrangement according to one of preceding claims 1 to 3, **characterized in that** the first and the second elevation (5, 5-1, 5-2) are formed symmetrically or asymmetrically referred to a vertical sectional plane (14) of the inner sleeve (2).

5. The arrangement according to one of the preceding claims, **characterized in that** the outer cover (7) arranged on the outer side (2-5) of the inner sleeve (2) forms an additional flattening (8) of the outer cover (7), wherein the additional flattening (8) is arranged on the flattening (4) of the inner sleeve (2) in order to enlarge the contact surface for a hand of the bicyclist resting on the bicycle handlebar grip (1).

6. The arrangement according to one of the preceding claims, **characterized in that** the flattening (4) is formed on a first inner sleeve end (2-2) of the inner sleeve (2), wherein the first inner sleeve end (2-2) particularly faces an end (A-1) of the handlebar (A), and/or **in that** the additional flattening (8) is formed on a first outer cover end (7-3) of the outer cover (7), wherein the first outer cover end (7-3) particularly faces an end (A-1) of the handlebar (A).

7. The arrangement according to claim 6, **characterized in that** the flattening (4) extends from the first inner sleeve end (2-2) of the inner sleeve (2) to a center region (2-12) of the inner sleeve (2) and/or **in that** the additional flattening (8) extends from the first outer cover end (7-3) of the outer cover (7) to another center region of the outer cover (7).

## Revendications

1. Ensemble, constitué d'une poignée de bicyclette (1) et d'un guidon (A), la poignée de bicyclette (1) étant fixée sur le guidon (A), la poignée de bicyclette (1) comprenant :
un manchon interne (2), lequel est conçu en une matière non déformable,
le manchon interne comportant une zone de fixation (3), laquelle est fixée au guidon (A), la zone de fixation (3) étant une zone de serrage (3) ; et
un revêtement externe (7), lequel est placé sur une face extérieure (2-5) du manchon interne (2) et est conçu en une matière plastique déformable,
**caractérisé en ce que**
sur une face supérieure (2-6) du manchon interne (2) est façonné un méplat (4), destiné à agrandir une surface d'appui d'une main d'un cycliste reposant sur la poignée de bicyclette (1),
sur la face supérieure (2-6) du manchon interne (2) étant façonnées une première élévation (5, 5-1) et une deuxième élévation (5, 5-2), la première et la deuxième élévations (5, 5-1, 5-2) étant placées sur des faces mutuellement opposées du méplat (4) et agrandissant et / ou délimitant le méplat (4) et
les deux élévations (5, 5-1, 5-2) incluant une plage angulaire (12) comprise entre 80° et 120° en rapport à un axe longitudinal (6) du manchon interne (2),
le manchon interne (2) comportant la zone de serrage (3) par laquelle le manchon interne (2) est fixé sur le guidon (A), la zone de serrage (3) comportant une fente de fixation (3-1), laquelle permet un positionnement avantageux de la zone de serrage (3) sur le guidon (A), pour le montage de la zone de serrage (3), le diamètre de la zone de serrage (3) étant réduit par un élément de serrage, pour serrer efficacement le manchon interne (2) sur le guidon (A), pour garantir un serrage efficace du manchon interne (2) de la poignée de bicyclette (1) sur le guidon (A), aussi bien le guidon (A) qu'également le manchon interne (2) étant conçus en une matière non déformable,
la face supérieure (2-6) du manchon interne (2) correspondant à la face du manchon interne (2), laquelle dans la position de montage conforme de la poignée de bicyclette (1) est orientée vers le haut, de telle sorte que dans la position de montage conforme de la poignée de bicyclette (1), la paume du cycliste puisse reposer sur la face supérieure (2-6) du manchon interne (2) et dans la position de montage conforme de la poignée de bicyclette (1), la face supérieure (2-6) du manchon interne (2) étant orientée vers le cycliste.

2. Ensemble selon la revendication 1, **caractérisé en ce que** les deux élévations (5, 5-1, 5-2) incluent une plage angulaire (12) d'environ 105° en rapport à l'axe longitudinal (6) du manchon interne (2).

3. Ensemble selon l'une quelconque des revendications précédentes 1 à 2, **caractérisé en ce que** dans la zone de l'au moins une élévation (5, 5-1, 5-2), le manchon interne (2) présente un premier diamètre extérieur (13-1), le manchon interne (2) présentant dans la zone du méplat (4) un deuxième diamètre extérieur (13-2), le premier diamètre extérieur (13- 1) étant supérieur au deuxième diamètre extérieur (13-2).

4. Ensemble selon l'une quelconque des revendications précédentes 1 à 3, **caractérisé en ce que** la première et la deuxième élévations (5, 5-1, 5-2) sont façonnées en étant symétriques ou non symétriques en rapport à un plan de coupe (14) vertical du manchon interne (2).

5. Ensemble selon l'une quelconque des revendications précédentes, **caractérisé en ce que** le revêtement externe (7) placé sur la face extérieure (2-5) du manchon interne (2) constitue un méplat (8) supplémentaire du revêtement externe (7), le méplat (8) supplémentaire étant placé sur le méplat (4) du manchon interne (2), pour augmenter la surface d'appui d'une main du cycliste reposant sur la poignée de bicyclette (1).

6. Ensemble selon l'une quelconque des revendications précédentes, **caractérisé en ce que** le méplat (4) est façonné sur une première extrémité (2-2) de manchon interne du manchon interne (2), la première extrémité (2-2) de manchon interne étant tournée notamment vers une extrémité (A-1) du guidon (A), et / ou le méplat (8) supplémentaire étant façonné sur une première extrémité (7-3) de revêtement externe du revêtement externe (7), la première extrémité (7- 3) de revêtement externe étant tournée notamment vers une extrémité (A-1) du guidon (A).

7. Ensemble selon la revendication 6, **caractérisé en ce que** le méplat (4) s'étend de la première extrémité (2-2) de manchon interne du manchon interne (2) vers une zone médiane (2-12) du manchon interne (2), et / ou le méplat (8) supplémentaire s'étend de la première extrémité (7-3) de revêtement externe du revêtement externe (7) vers une autre zone médiane du revêtement externe (7).
